# EUROPÄISCHE PATENTSCHRIFT

(11) **EP 2 778 544 B1**
(45) Veröffentlichungstag und Bekanntmachung des Hinweises auf die Patenterteilung: **04.10.2017**
(21) Anmeldenummer: 14158613.1
(22) Anmeldetag: 10.03.2014
(51) Int. Cl.: F24D 19/00, F16L 59/14, F16L 59/16

(54) **Armaturengruppe**
Fittings
Groupe de robinetterie

(30) Priorität: 11.03.2013 DE 202013002350 U
(43) Veröffentlichungstag der Anmeldung: 17.09.2014
(73) Patentinhaber: Gebr. Tuxhorn GmbH & Co. KG, 33659 Bielefeld (DE)
(72) Erfinder: Filipowsky, Michael, 33332 Gütersloh (DE)
(74) Vertreter: Laufhütte, Dieter

(56) Entgegenhaltungen:
- EP-A2- 2 306 098
- DE-U1- 9 411 684
- DE-U1-202011 003 874

## Beschreibung

Die Erfindung betrifft eine Isolierung für eine Armaturengruppe, insbesondere zur Verwendung in einer Heizkreisvorrichtung, die Rohrleitungen und mindestens eine Pumpe aufweist.

Es ist bereits bekannt, Armaturen im Heizungsbereich, d. h. Heizkreisgruppen bzw. Pumpengruppen, vor Wärmeverlusten zu schützen. Hierfür sind aus Wärmedämmschalen bestehende Isolierungen bekannt, die formschlüssig in Form einer Vorder- und Hinterschale die Pumpengruppe umschließen.

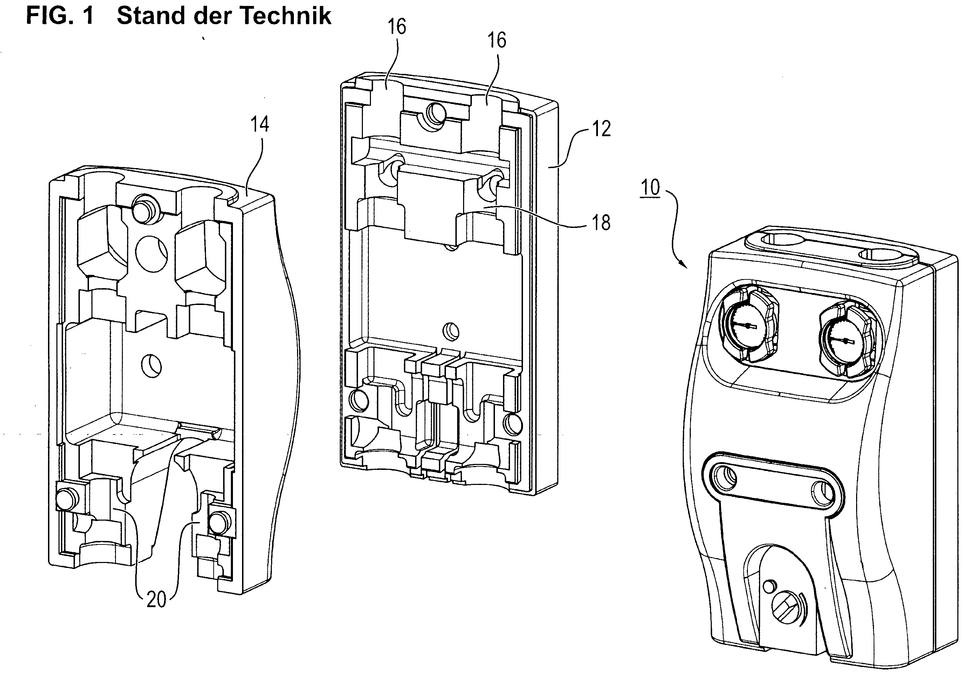

In Figur 1 ist eine entsprechende Isolierung 10 nach dem Stand der Technik gezeigt. Die Isolierung besteht aus einer hinteren Formschale 12 und einer vorderen Formschale 14, die jeweils aus Kunststoff gefertigt sind. Die Formschalen 12 und 14 bilden Isolierhälften der Isolierung und nehmen in entsprechenden Formausnehmungen 16, 18, 20 entsprechende hier nicht näher dargestellte Teile der Armaturen einer hier im linken Teil der Figur 1 nicht näher dargestellten Pumpengruppe auf. Die Formhälften 12 und 14 werden auf ihrer Trennebene über ein selbstklemmendes Verschlusssystem verschlossen und sollen relativ fest mit der Pumpengruppe verbunden sein, um ein loses Aufsitzen der Isolierung auf der Heizkreisgruppe zu verhindern. Die vordere Formschale 14 der Isolierung 10 weist einen entsprechenden Freiraum auf, um die in der Armatur vorgesehene Pumpe aufzunehmen. Diese kann in der hier nicht näher dargestellten rechten Rohrleitung oder in der linken Rohrleitung vorgesehen sein, je nach dem, ob der Vorlauf des Heizkreislaufs rechts bzw. links angeordnet ist.

Aus der DE 20 2011 003 874 U1 ist eine gattungsgemäße Amaturengruppe mit den Merkmalen des Oberbegriffs des Anspruchs 1 bekannt.

Zum festen Sitz der Isolierung 10 auf der Heizkreisgruppe müssen die beiden als Formkörper ausgebildeten Formschalen 12 und 14 an die jeweiligen Nennweiten der Rohrleitungen der Pumpengruppe angepasst sein. Das bedingt jeweils unterschiedliche Ausnehmungen zur Aufnahme der unterschiedlichen Durchmesser der Bauteile, so dass für jede Nennweite eigene Formschalen 12 bzw. 14 für die Isolierung bereitgestellt werden müssen.

Ausgehend von dem vorgenannten Stand der Technik ist es Aufgabe der Erfindung, eine Isolierung bereitzustellen, die fest auf der Pumpengruppe aufsitzt und dabei eine gute Isolierung gewährleistet und trotzdem für mehrere Nennweiten gleiche Bauteile verwenden kann.

Erfindungsgemäß wird diese Aufgabe durch die Kombination der Merkmale des Anspruchs 1 gelöst.

Nach dieser Lösung wird eine Isolierung für eine Armaturengruppe, insbesondere zur Verwendung in einer Heizkreisvorrichtung vorgesehen, die Rohrleitungen und mindestens eine Pumpe aufweist. Gemäß der Erfindung besteht die Isolierung aus zwei Formschalen, die die Armaturengruppe umschließen, wobei die Formschalen Berührungspunkte oder -bereiche aufweisen, die bei geschlossenen Formschalen mit der Armaturengruppe in Berührung stehen. In zumindest einer Schale ist ein Formteil lösbar aufgenommen, das zwei vorzugsweise in einem rechten Winkel zueinander stehende Stege aufweist, in die jeweils an die Nennweite der Rohrleitungen der Armaturengruppen angepasste Ausnehmungen eingearbeitet sind, wobei in den beiden Stegen jeweils Ausnehmungen unterschiedlicher Größe vorgesehen sind und wobei das mindestens eine Formteil in die hintere Formschale der beiden Formschalen einklipsbar ist.

Das Formteil kann jeweils in eine Formschale klemmend aufgenommen werden und je nach Nenndurchmesser der Rohrleitungen der Armaturengruppe von der Formschale getrennt werden, gegebenenfalls um 90° gekippt bzw. um 180° gedreht werden und wieder in die Formschale eingesetzt werden. Zur richtigen Zuordnung kann die Angabe der Nennweite mit in das Formteil eingeschäumt oder eingeprägt sein und im montierten Zustand die Anwendung für die entsprechende Nennweite zeigen. Über dieses mindestens eine Formteil kann somit die Isolierung auf die Rohrleitung der Pumpengruppe klemmend aufgeschoben werden, so dass die eine Formschale fest mit der Pumpengruppe verbunden ist. Auf die so aufgeschobene Formschale kann die zweite Formschale aufgesetzt werden, so dass sich hierdurch eine insgesamt feste Verbindung zwischen der Isolierung und der Armaturengruppe ergibt.

Soll die Isolierung für eine Armaturengruppe mit Rohrleitungen eines anderen Nenndurchmessers verwendet werden, kann das Formteil entsprechend umgesteckt werden, so dass die Ausnehmungen des passenden Nenndurchmessers auf die Rohrleitungen der Armaturengruppe klemmend geschoben werden kann.

Weitere Einzelheiten und Vorteile der Erfindung ergeben sich aus den sich an den Hauptanspruch anschließenden Unteransprüchen.

Vorteilhaft sind die Formschalen formschlüssig über ein selbstklemmendes Verschlußsystem verschließbar.

In einer der Formschalen ist gemäß einer weiteren vorteilhaften Ausgestaltung der Erfindung mindestens eine Öffnung vorgesehen, durch die die in der Armaturen gruppe vorhandene Pumpe im eingebauten Zustand zumindest teilweise heraussteht. Hierdurch kann die temperaturempfindliche Elektronik vor einer Überhitzung geschützt werden.

Besonders vorteilhaft sind in der einen Formschale zwei nebeneinander angeordnete Öffnungen vorgesehen, um wahlweise eine Pumpe aufzunehmen oder für den Fall, dass keine Pumpe aufzunehmen ist, mit einem Deckel verschlossen zu werden. Hierdurch kann die Isolierung bei einer Armaturengruppe eines Heizkreislaufs eingesetzt werden, bei dem der Vorlauf mit der entsprechenden Pumpe rechts oder wahlweise auch links angeordnet ist. Dabei wird die Isolierung so aufgesetzt, dass die Pumpe durch eine der Öffnungen herausragt. Die jeweils freie Öffnung wird durch den entsprechend mit der Isolierung mitgelieferten Deckel verschlossen. Damit können hitzeempfindliche Energiesparpumpen neuer Bauart verwendet werden, bei denen der elektrische Teil der Pumpe nicht innerhalb der Isolierungen liegt und damit nicht zu hohen Temperaturen, die der Elektronik schaden können, ausgesetzt wird.

Das mindestens eine Formteil, über welches die Formschale auf die Rohrleitungen der Armaturengruppe aufgeschoben wird, wird vorzugsweise in die hintere Formschale der beiden Formschalen eingeclipst. Gemäß einer besonders vorteilhaften Ausgestaltung der Erfindung sind zwei Formteile lösbar in zumindest einer der Formschalen angeordnet. Hierdurch kann eine besonders feste Verbindung mit der Armaturengruppe erzielt werden. Dabei weist gemäß einer ganz besonders vorteilhaften Ausgestaltung der Erfindung ein erstes Formteil je Steg zwei Ausnehmungen auf, die an unterschiedliche Nenndurchmesser der Rohrleitungen angepaßt sind und diese im montierten Zustand zu mehr als der Hälfte ihres Außendurchmessers umgreifen, während das andere Formteil je Steg an parallel zueinander verlaufende Rohrleitungen unterschiedlichen Nenndurchmessers angepaßte Flankenbereiche aufweist, die im montierten Zustand außen an den Rohrleitungen anliegen. Durch diese Formgebung umfasst das erste Formteil die Rohrleitungen und führt zu einem festen Sitz. Das zweite beabstandet vom ersten Formteil angeordnete Formteil umfasst die parallel verlaufenden Rohrleitungen der Armaturengruppe jeweils an ihrer nach außen weisenden Oberfläche und führt somit dazu, dass die Isolierung nicht seitlich verschoben werden kann.

Vorteilhaft ist in einer der Formschalen mindestens eine weitere Öffnung zur Aufnahme mindestens eines Thermometers der Armaturengruppe ausgenommen. Besonders vorteilhaft sind hier zwei Öffnungen ausgenommen, wobei eine Öffnung das Thermometer des Vorlaufs und eine Öffnung das Thermometer des Rücklaufs aufnimmt. In vorteilhafter Weise bestehen die Formschalen aus miteinander über angespritzte Clipsverbindungen verbindbaren Kunststoffschalen. Um eine verbesserte Verbindung der zusammengesteckten Formschalen zu erreichen, weist eine Formschale seitlich jeweils mindestens zwei parallel zueinander angeordnete Fortsätze auf, die in jeweils im montierten Zustand in der gegenüberliegenden Formschale vorgesehene Ausnehmungen eingreifen.

Weitere Merkmale, Einzelheiten und Vorteile von Ausgestaltungen der Erfindung ergeben sich aus der beigefügten Zeichnung. Es zeigen:
- Figur 1:: eine perspektivische Ansicht einer Isolierung nach dem Stand der Technik in zusammengesetzten und getrennten Zustand,
- Figuren 2 und 3:: eine erfindungsgemäße Isolierung in einer perspektivischen Explosionsdarstellung und im zusammengebauten Zustand, wobei hier jeweils unterschiedliche Armaturen dargestellt sind,
- Figur 4:: jeweils Teile der Isolierung nach den Figuren 2 und 3 in Draufsicht,
- Figur 5:: die Teile der Isolierung gemäß Figur 4 mit jeweils eingesetzter Armaturengruppe und
- Figur 6:: andere Teile der Isolierung in einer Ansicht von vorne und von hinten.

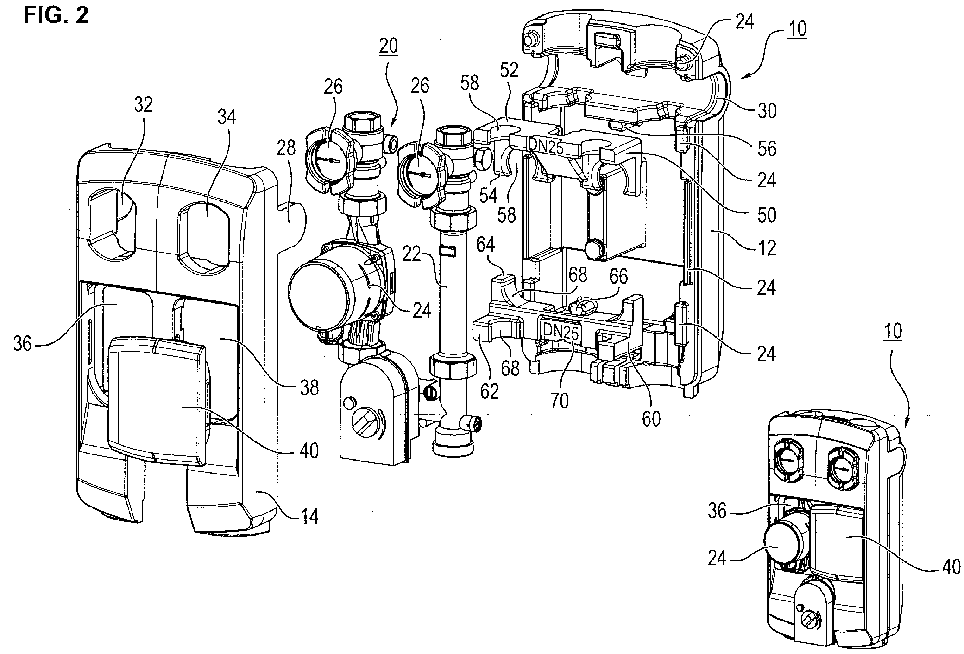

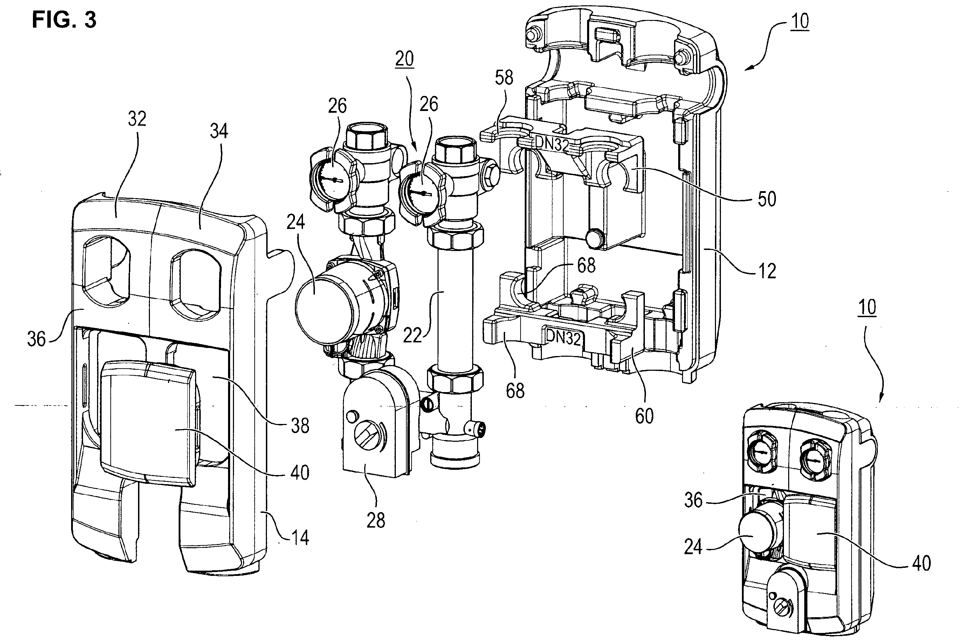

Die Figur 2 zeigt eine Armaturengruppe 20, die hier beispielsweise als Pumpengruppe für einen Festbrennstoffkessel dargestellt ist. Diese Pumpengruppe weist Rohrleitungen 22 einer bestimmten Nennweite (beispielsweise DN25 (Figur 2) oder DN32 (Figur 3)) auf. In einer Rohrleitung ist eine Pumpe 24 integriert. Weiterhin sind in den Rohrleitungen 22 jeweils Thermometer 26 eingebaut. Mit 28 ist ein thermisches Mischventil bezeichnet.

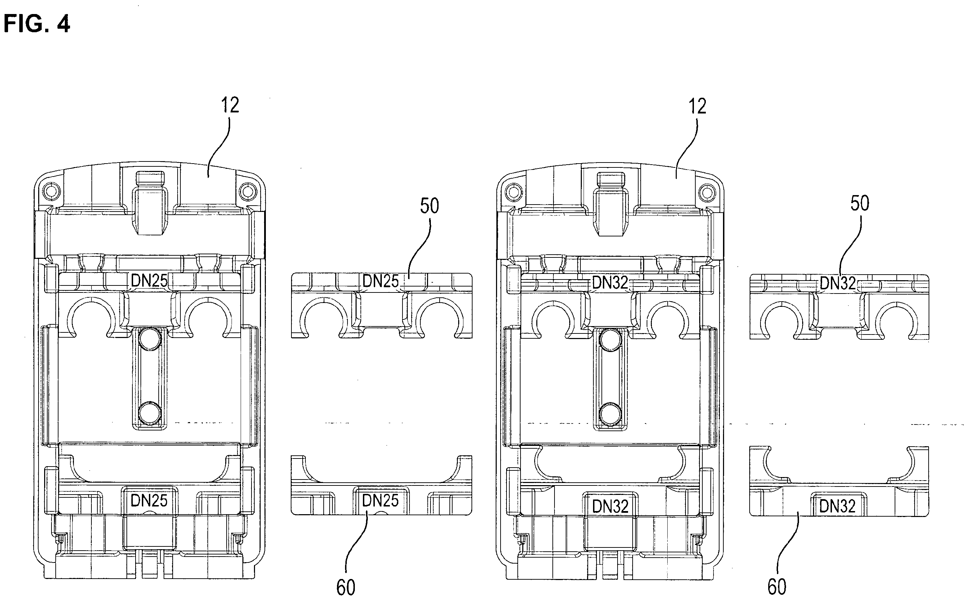

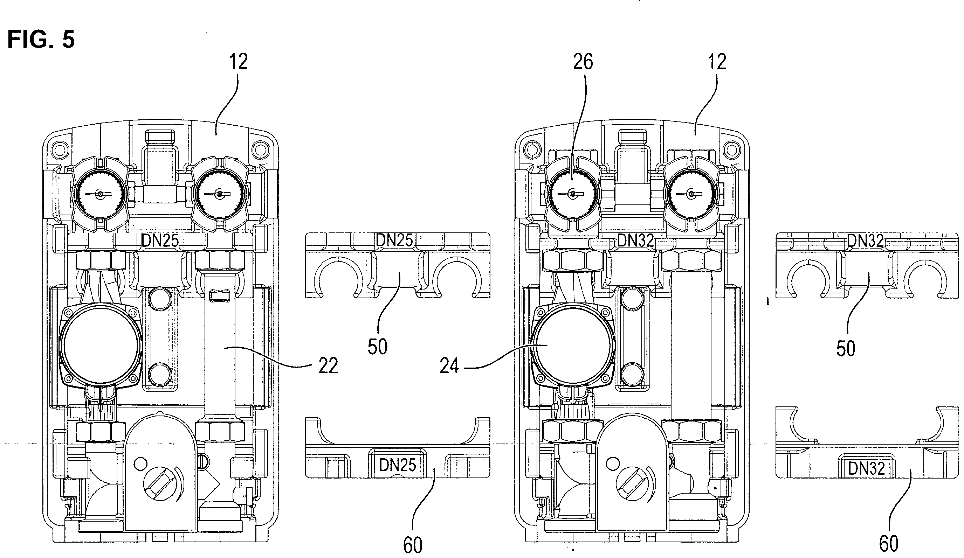

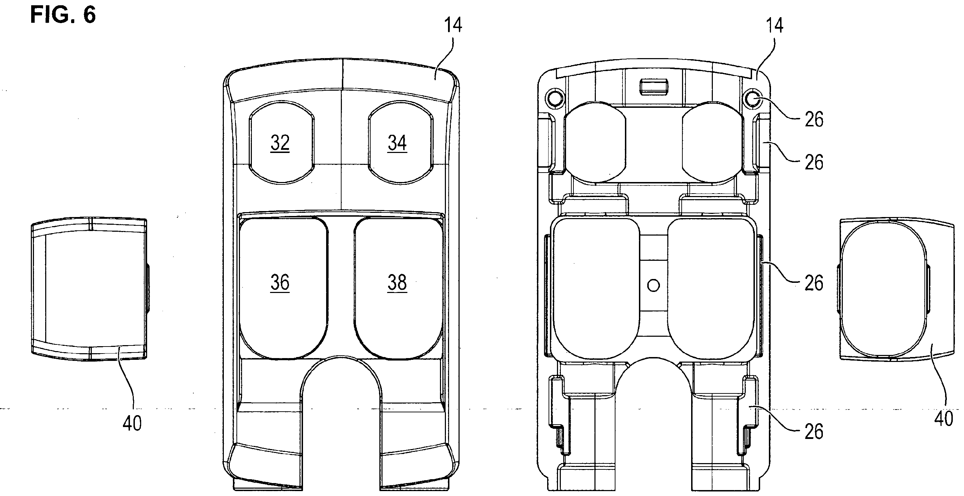

Die Figuren 2 und 3 entsprechen sich weitgehend. Sie unterscheiden sich lediglich darin, dass hier jeweils Armaturengruppen mit Rohrleitungen 22 unterschiedlichen Nenndurchmessers verwendet werden. Die Isolierung 10 besteht jeweils aus einer hinteren Formschale 12 und einer vorderen Formschale 14, die aus den Darstellungen gemäß den Figuren 2 und 3 aber auch aus den Figuren 4 und 5 bzw. aus Figur 6 in ihrem Aufbau ersichtlich sind.

Die Formschalen 12 und 14 bestehen aus gespritzten Kunststoffformteilen, die jeweils als miteinander verbindbare Formhälften 12 und 14 ausgebildet sind. Ein Zusammenfügen der Formhälften erfolgt ungefähr in der Ebene der Armaturengruppe 20. Dort sind im Fügebereich der Formhälften 12 und 14 jeweils Clipsverbindungen 24 vorgesehen, die im hier dargestellten Ausführungsbeispiel durch angespritzte Vorsprünge an der hinteren Formschale ausgebildet sind, welche in entsprechende Ausnehmungen 26 in der vorderen Formschale 14 (vgl. Figur 6) clipsend eingreifen. Zur stabileren Verbindung der Formschalen 12 und 14 sind in der vorderen Formschale 14 seitlich jeweils zwei parallel zueinander angeordneten Fortsätze 28 ausgebildet, die in jeweils im montierten Zustand in der gegenüberliegenden Formschale 12 vorgesehene Ausnehmungen 30 eingreifen.

In der vorderen Formschale 14 sind Ausnehmungen 32 und 34 zur Aufnahme der Thermometer 26 vorgesehen. Weiterhin sind Ausnehmungen 36 und 38 vorgesehen. Im zusammengesetzten Zustand ragt durch eine dieser Ausnehmungen 36 bzw. 38 die Pumpe 24, wie im zusammengebauten Zustand in den Figuren 2 und 3 gezeigt. Hier ragt die Pumpe 24 jeweils durch die Öffnung 36. Die leere Öffnung 38 ist dagegen durch einen Deckel 40, der in die Öffnung 38 einclipsbar ist, verschlossen. Soweit die Pumpe 24 aufgrund einer anderen Anordnung des Vorlaufs im Heizkreislauf auf der anderen Seite angeordnet sein soll, kann die Pumpe 24 auch wahlweise durch die Öffnung 38 ragen, so dass die freie Öffnung 36 durch den Deckel 40 verschlossen werden kann. Hierdurch ist es möglich, eine universale Formschale 40 zu schaffen, die bei unterschiedlichen Pumpenkonfigurationen eingesetzt werden kann, ohne dass die Isolierung nachbearbeitet bzw. angepasst werden müsste.

Von besonderer Bedeutung im Rahmen der vorliegenden Erfindung sind die Formteile 50 und 60. Diese sind, wie in den Figuren 2 und 3 bzw. den Figuren 4 und 5 dargestellt, als Winkelstücke ausgebildet, die jeweils Stege 52 und 54 bzw. 62 und 64 aufweisen. Die Formteile 50 und 60 sind jeweils mit der hinteren Formschale 12 verbindbar, wobei auch hier wieder eine Clipsverbindung 56 bzw. 66 vorgesehen ist. In den jeweiligen Stegen 52 und 54 bzw. 62 und 64 sind nun unterschiedliche Ausnehmungen 58 bzw. 68 vorgesehen. Diese Ausnehmungen entsprechen unterschiedlichen Nennweiten der Rohrleitungen 22 der Armaturen 20.

Die Ausnehmungen 52 entsprechen jeweils den Nennweiten der Rohrdurchmesser 22 gemäß Figur 2, in diesem Fall also der Nennweite DN 25. Die Ausnehmungen 58 und 68 dagegen entsprechen jeweils den Nennweiten der Rohrleitungen 22 der Armaturengruppe 20 in Figur 3, die eine Nennweite DN 32 aufweisen. Über die Formteile 50 bzw. 60, die die Rohrleitungen 22 klemmend umgreifen (vgl. Figur 5) wird die hintere Formschale 12 mit der Armaturengruppe 20 fest verbunden. Die anschließend auf die hintere Formschale aufgeclipste vordere Formschale 14 bildet mit der hinteren Formschale 12 eine fest mit der Armaturengruppe 20 verbundene Isolierung, wie aus den Gesamtdarstellungen der Figuren 2 und 3 zu ersehen ist.

Die Vorteile der erfindungsgemäßen Isolierung 10 liegen darin, dass mit einer baugleichen Ausführung eine Isolierung 10 für zwei unterschiedliche Nennweiten der Armaturengruppe 20 zur Verfügung gestellt werden können. Hieraus ergeben sich logistische Vorteile für die Herstellung und Lagerhaltung, insbesondere auch Vorteile für das Vorhalten von Ersatzteilen. Wahlweise kann die Pumpe 24 rechts oder links eingebaut werden. Die Armaturengruppe 20 kann bei beiden Nennweiten formschlüssig mit der Isolierung verbunden werden. Bestehende Ausschnitte im Bereich der Pumpe können, soweit sie nicht verwendet werden, durch eine einfache Blendenlösung (Deckel 40) geschlossen werden. Durch die entsprechend gro-βen Ausnehmungen 36 bzw. 38 in der vorderen Formschale 14 können verschiedene Pumpen ohne Nacharbeit der Isolierung eingesetzt werden. Insgesamt ergibt sich eine optische ansprechende Form bei einer variantenreichen universellen Anwendung.

Besonders vorteilhaft sind in den Formteilen 50 bzw. 60 jeweils die Angaben 70 der Nenndurchmesser eingeprägt bzw. aufgedruckt. Hierdurch kann der Monteur einfach erkennen, ob er die Formteile 50 bzw. 60 in der entsprechend gesteckten Lage verwenden kann oder ob er sie vor Aufsetzen der Formschale 12 auf die Armaturengruppe 20 umstecken muss.

## Patentansprüche

1. Armaturengruppe (20) mit Isolierung, insbesondere zur Verwendung in einer Heizkreisvorrichtung, wobei die Armaturengruppe Rohrleitungen (22) und mindestens eine Pumpe (24) aufweist, wobei die Isolierung aus zwei Formschalen (12, 14) besteht, die die Armaturengruppe (20) umschließen, wobei die Formschalen (12, 14) Berührungspunkte oder -bereiche aufweisen, die bei geschlossenen Formschalen (12, 14) mit der Armaturengruppe (20) in Berührung stehen, und dass in zumindest einer Schale ein Formteil (50, 60) lösbar aufgenommen ist,
**dadurch gekennzeichnet,**
**dass** das Formteil (50, 60) zwei vorzugsweise in einem rechten Winkel zueinander stehende Stege (52, 54; 62, 64) aufweist, in die jeweils an die Nennweite der Rohrleitungen (22) der Armaturengruppe (20) angepasste Ausnehmungen eingearbeitet sind, wobei in den beiden Stegen (52, 54; 62, 64) jeweils Ausnehmungen (58, 68) unterschiedlicher Größe vorgesehen sind und wobei das mindestens eine Formteil (50, 60) in die hintere Formschale der beiden Formschalen (12, 14) einclipsbar ist und wobei das mindestens eine Formteil (50, 60) durch Umstecken zwei unterschiedliche Rohrnennweiten aufnehmen kann.

2. Armaturengruppe (20) nach Anspruch 1, **dadurch gekennzeichnet, dass** die Formschalen (12, 14) formschlüssig über ein selbstklemmendes Verschlußsystem verschließbar sind.

3. Armaturengruppe (20) nach Anspruch 1 oder 2, **dadurch gekennzeichnet, dass** in einer der Formschalen (12, 14) mindestens eine Öffnung vorgesehen ist, durch die die in der Armaturengruppe (20) vorhandene Pumpe (24) im eingebauten Zustand zumindest teilweise heraussteht.

4. Armaturengruppe (20) nach Anspruch 3, **dadurch gekennzeichnet, dass** in der einen Formschale zwei nebeneinander angeordnete Öffnungen vorgesehen um wahlweise die Pumpe (24) aufzunehmen oder für den Fall, dass keine Pumpe (24) aufzunehmen ist, mit einem Deckel verschlossen zu werden.

5. Armaturengruppe (20) nach einem der Ansprüche 1 bis 4, **dadurch gekennzeichnet, dass** die zwei Formteile (50, 60) lösbar in zumindest einer der Formschalen (12, 14) angeordnet sind.

6. Armaturengruppe (20) nach Anspruch 5, **dadurch gekennzeichnet, dass** eines der Formteile (50, 60) je Steg zwei Ausnehmungen (58, 68) aufweist, die an unterschiedliche Nenndurchmesser der Rohrleitungen (22) angepasst sind und diese im montierten Zustand zu mehr als der Hälfte ihres Außendurchmessers umgreifen, während das andere Formteil (50, 60) je Steg an parallel zueinander verlaufende Rohrleitungen (22) unterschiedlichen Nenndurchmessers angepasste Flankenbereiche aufweist, die im montierten Zustand außen an den Rohrleitungen (22) anliegen.

7. Armaturengruppe (20) nach einem der Ansprüche 1 bis 6 **dadurch gekennzeichnet, dass** in einer der Formschalen (12, 14) mindestens eine weitere Öffnung zur Aufnahme mindestens eines Thermometers der Armaturengruppe (20) aufweist.

8. Armaturengruppe (20) nach einem der Ansprüche 1 bis 7, **dadurch gekennzeichnet, dass** die Formschalen (12, 14) aus miteinander über angespritzte Clipsverbindungen (24) verbindbaren Kunststoffschalen bestehen.

9. Armaturengruppe (20) nach Anspruch 8, **dadurch gekennzeichnet, dass** eine der Formschalen (12, 14) seitlich jeweils zwei parallel zueinander angeordnete Fortsätze (28) aufweist, die in jeweils im montierten Zustand in der gegenüberliegenden Formschale vorgesehene Ausnehmungen (30) eingreifen.

## Claims

1. Group of fittings (20) with insulation, in particular for use in a heating cycle device, wherein the group of fittings comprises tube lines (22) and at least one pump (24), wherein the insulation consists of two mold shells (12, 14) enclosing the group of fittings (20), wherein the mold shells (12, 14) comprise contact points or contact regions contacting the group of fittings (20) when the mold shells (12, 14) are closed, and wherein a molded part (50, 60) is received in at least one shell in a releasable manner,
**characterized in that**
the molded part (50, 60) comprises two webs (52, 54; 62, 64) preferably at a right angle with respect to one another and having recesses formed therein which are in each case adapted to the nominal width of the tube lines (22) of the group of fittings (20), wherein recesses (58, 68) of in each case different size are provided in the two webs (52, 54; 62, 64) and wherein the at least one molded part (50, 60) can be clipped into the rear shell of the two mold shells (12, 14) and wherein the at least one molded part (50, 60) is capable of receiving two different nominal tube widths by re-plugging.

2. Group of fittings (20) according to claim 1, **characterized in that** the mold shells (12, 14) can be locked in a form-fit manner by means of a self-locking locking system.

3. Group of fittings (20) according to claim 1 or 2, **characterized in that** in one of the mold shells (12, 14) at least one opening is provided, through which the pump (24) provided in the group of fittings (20) at least partly projects in the mounted state.

4. Group of fittings (20) according to claim 3, **characterized in that** two openings arranged next to one another are provided in one of the mold shells, in order to selectively receive the pump (24) or be closed with a lid in the case that no pump (24) shall be received.

5. Group of fittings (20) according to one of claims 1 to 4, **characterized in that** the two molded parts (50, 60) are arranged in at least one of the mold shells (12, 14) in a releasable manner.

6. Group of fittings (20) according to claim 5, **characterized in that** one of the molded parts (50, 60) comprises two recesses (58, 68) per web being adapted to different nominal diameters of the tube lines (22) and in the mounted state enclosing these lines by more than half of their outer diameter, while the other molded part (50, 60) comprises two flank regions per web adapted to tube lines (22) running in parallel to one another and having different nominal diameters, which flank regions rest against the outer side of the tube lines (22) in the mounted state.

7. Group of fittings (20) according to one of claims 1 to 6, **characterized in that** one of the mold shells (12, 14) comprises at least one further opening for receiving at least one thermometer of the group of fittings (20).

8. Group of fittings (20) according to one of claims 1 to 7, **characterized in that** the mold shells (12, 14) consist of plastic shells connectable via clipping connections (24) molded thereto.

9. Group of fittings (20) according to claim 8, **characterized in that** one of the mold shells (12, 14) comprises, laterally, in each case two protrusions (28) arranged in parallel to one another, which in the mounted state engage into recesses (30) provided in the opposite mold shell.

## Revendications

1. Groupe de robinetterie (20) avec isolation, notamment pour utilisation dans un dispositif à circuit de chauffage, le groupe de robinetterie présentant des conduites (22) et au moins une pompe (24), l'isolation étant constituée de deux coques moulées (12, 14) qui entourent le groupe de robinetterie (20), les coques moulées (12, 14) présentant des points de contact ou des zones de contact qui sont en contact avec le groupe de robinetterie (20) lorsque les coques moulées (12, 14) sont fermées, et une pièce moulée (50, 60) étant logée de manière amovible dans au moins une coque,
**caractérisé en ce**
**que** la pièce moulée (50, 60) présente deux nervures (52, 54 ; 62, 64) situées de préférence en angle droit l'une par rapport à l'autre, dans lesquelles sont incorporés des évidements respectivement adaptés au diamètre nominal des conduites (22) du groupe de robinetterie (20), des évidements (58, 68) de taille différente étant respectivement ménagés dans les deux nervures (52, 54 ; 62, 64), et l'au moins une pièce moulée (50, 60) pouvant être encliquetée dans la coque moulée arrière des deux coques moulées (12, 14), et l'au moins une pièce moulée (50 60) pouvant recevoir deux diamètres nominaux de conduite différents par permutation du raccordement.

2. Groupe de robinetterie (20) selon la revendication 1, **caractérisé en ce que** les coques formées (12, 14) peuvent être fermées par adhérence de forme par l'intermédiaire d'un système de fermeture autobloquant.

3. Groupe de robinetterie (20) selon la revendication 1 ou 2, **caractérisé en ce qu'**au moins une ouverture est ménagée dans l'une des coques moulées (12, 14), à travers laquelle la pompe (24) présente dans le groupe de robinetterie (20) dépasse au moins en partie à l'état monté.

4. Groupe de robinetterie (20) selon la revendication 3, **caractérisé en ce que** deux ouvertures disposées l'une à côté de l'autre sont ménagées dans l'une coque moulée pour, sélectivement, loger la pompe (24) ou, pour le cas où aucune pompe (24) ne doive être logée, pour être fermée avec un couvercle.

5. Groupe de robinetterie (20) selon l'une quelconque des revendications 1 à 4, **caractérisé en ce que** les deux pièces moulées (50, 60) sont disposées de manière amovible dans au moins une des coques moulées (12, 14).

6. Groupe de robinetterie (20) selon la revendication 5, **caractérisé en ce que** l'une des pièces moulées (50, 60) présente deux évidements (58, 68) par nervure, lesquels sont adaptés à différents diamètres nominaux des conduites (22) et entourent ces dernières de plus de la moitié de leur diamètre extérieur à l'état monté, alors que l'autre pièce moulée (50, 60) présente, par nervure, des zones de flanc adaptées à des conduites (22) s'étendant parallèlement les unes aux autres, de diamètre nominal différent, qui, à l'état monté, sont adjacentes extérieurement aux conduites (22).

7. Groupe de robinetterie (20) selon l'une quelconque des revendications 1 à 6, **caractérisé en ce que** l'une des coques moulées (12, 14) présente au moins une ouverture supplémentaire pour le logement d'au moins un thermomètre du groupe de robinetterie (20).

8. Groupe de robinetterie (20) selon l'une quelconque des revendications 1 à 7, **caractérisé en ce que** les coques moulées (12, 14) sont constituées de coques en matière plastique, pouvant être raccordées entre elles par l'intermédiaire de liaisons par clips (24) moulées par injection.

9. Groupe de robinetterie (20) selon la revendication 8, **caractérisé en ce que** l'une des coques moulées (12, 14) présente latéralement respectivement deux prolongements (28) disposés parallèlement l'un à l'autre, lesquels, respectivement à l'état monté, ont prise dans des évidements (30) ménagés dans la coque moulée opposée.
